(19) Europäisches Patentamt / European Patent Office / Office européen des brevets

(11) **EP 2 963 837 B1**

(12) **EUROPEAN PATENT SPECIFICATION**

(45) Date of publication and mention
of the grant of the patent:
**24.05.2017 Bulletin 2017/21**

(51) Int Cl.:
*H04B 3/46* (2015.01)

(21) Application number: **14290194.1**

(22) Date of filing: **30.06.2014**

(54) **Device and method for identifying and locating impaired communication lines**

Vorrichtung und Verfahren zur Identifizierung und Ortung gestörter Kommunikationsleitungen

Dispositif et procédé pour identifier et localiser des lignes de communication altérée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.01.2016 Bulletin 2016/01**

(73) Proprietor: **ALCATEL LUCENT
92100 Boulogne-Billancourt (FR)**

(72) Inventors:
• **Dupuis, Nicolas**
**6041 Gosselies (BE)**
• **Drooghaag, Benoit**
**6041 Gosselies (BE)**

(74) Representative: **ALU Antw Patent Attorneys
Copernicuslaan 50
2018 Antwerpen (BE)**

(56) References cited:
**EP-A1- 2 365 661     WO-A1-2013/029671**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

The invention relates to the field of remote diagnosis of impaired communication lines. Such communications lines are for example Digital Subscriber Lines also referred to as DSL lines used for bringing data services to end users.
More particularly, the invention relates to diagnosing impaired communication lines on the basis of heatmap coefficients from a heatmap.

### Background of the Invention

In DSL technology, traditional twister pair copper lines are used to provide data services such as internet services to end users. By the application of digital modulation techniques it has become possible to transfer binary data over these copper lines thereby offering broadband internet access to end users. Typically, these twisted pairs run from the end users, often referred to as the CPE or Customer Premises Equipment, in bundles towards a cabinet. In such a cabinet, a Digital Subscriber Line Access Multiplexer or DSLAM then multiplexes the signals from the twisted pairs onto a high speed backbone link and vice versa. The backbone link then connects the cabinet with the data network of the service provider, often referred to as the Central Office or CO.
Although the twisted pair communication lines only run over a relative small distance, they are known to be the bottleneck in terms of Quality of Service. It is therefore important to be able to remotely diagnose impaired twisted pair communication lines, i.e., to discover which lines have a physical defect and in which bundle the line is located. This aids the network operators in delivering a good service to the customer as well as in saving money and time because human interventions may be avoided.
With the increasing signal bandwidth used in the VDSL2 standard, the communication lines have even become more sensitive to possible impairments. To enable these higher signal bandwidths, the concept of vectoring was introduced in VDSL2. With vectoring, the cross-talk of data signals occurring between communication lines is measured and expressed in cross-coupling or cross-talk coefficients in a vectoring matrix. Each such coefficient or cross-talk value expresses the amount of cross-talk between a single pair of communication line. These cross-talk coefficients can then be applied in different ways to mitigate the cross-talk between the communication lines.
In the case of pre-compensation, the vectoring matrix is used to pre-compensate the data symbols before they are transmitted over the respective communication lines. By this pre-compensation, the cross-talk occurring during transmission is cancelled out and the data symbols are received at the other as no cross-talk at all. Pre-compensation is typically applied to signals sent towards the end users. In the case of post-compensation, the vectoring matrix is used to post-compensate the data symbols after they have been received.
When the cross-talk coefficients are represented in a matrix where each column and line represents a different communication line, the matrix is referred to as a heat matrix.
In the publication EP2365661, a clustering or grouping of the communication lines based on the heat matrix is proposed. By inspecting the cross-talk induced by a specific communication line, the line is assigned to a topological element, for example to a certain bundle or binder. This way, the topology of the lines can be retrieved from the heat matrix and thus from the cross-talk coefficients.
A disadvantage is however that the clustering can be erroneous when there are impairments in the communication lines as these will also affect the cross-talk values. It is thus also not possible to identify and locate impairments.
It is therefore an object of the present invention to alleviate the above disadvantage and to provide a solution that both identifies impaired lines and assigns them to a topology element of the communication lines.

### Summary of the Invention

This object is achieved, in a first aspect, by a device for identifying an impaired communication line from a plurality of communication lines. The device is further configured to perform the following steps:

- Obtaining heatmap coefficients for these communication lines with respect to the communication lines. Wherein a heatmap coefficient for a first communication line with respect to a second communication line is indicative for an amount of cross-talk between the first and second communication lines normalized by an attenuation value for the first communication line.
- Identifying one or more impaired communication lines comprising the impaired communication line from the heatmap coefficients .
- Splitting the heatmap coefficients in non-impaired heatmap coefficients for non-impaired communication lines and impaired heatmap coefficients for the impaired communications lines.

- Grouping the non-impaired communication lines into topology elements determined from the non-impaired heatmap coefficients.
- Calculating averaged heatmap values for each topology element with respect to the non-impaired communication lines. Wherein a respective averaged heatmap value for a respective topology element with respect to a respective communication line is calculated from heatmap coefficients for all non-impaired communication lines of the respective topology element with respect to the respective non-impaired communication line.
- Correlating, for each topology element, impaired heatmap coefficients for the impaired communication line with respect to the non-impaired communication lines with averaged heatmap values for each topology element with respect to said non-impaired communication lines thereby obtaining a best correlated topology element to which the impaired communication line belongs

The topology elements further correspond to binders each binding a subset of the communication lines into a separate bundle.

Heatmap coefficients may be obtained from a vectoring matrix by normalizing the cross-talk values in the matrix by the attenuation value of the line itself. This way, the heatmap coefficients are not only a measure for the signal loss caused by cross-talk induced from a respective other line, but also a measure for the signal loss caused by the line itself. The signal loss on the line will be greater if the line has impairments such as for example a bad connector, a bend or some damage. Heatmap coefficients may be represented in a heatmap matrix - also referred to as a heatmap - whereby the rows and columns represent the communication lines and the elements of the matrix the heatmap coefficients. Such heatmap coefficients are used to weight the pre- or post-compensation signals in order to cancel out the crosstalk within a vectoring group.

By the identifying and splitting step, the heatmap values are split up in two groups, a group of heatmap values for impaired lines and a group of values for non-impaired lines. The topology grouping in topology elements is then only done for the heatmap coefficients for non-impaired lines. The result of the grouping is that each non-impaired communication line is assigned to a single topology element. Each communication line may for example belong to a bundle whereby each topology element corresponds to a specific bundle of lines.

It is an advantage that the heatmap coefficients for impaired lines are first separated from the non-impaired lines such that the topology grouping is not affected by the noisy impaired heatmap coefficients, i.e., the heatmap coefficients for impaired communication lines.

In the calculating and correlating step, the impaired lines are then assigned to one of the topology elements. As each topology element groups several non-impaired lines, there are associated heatmap coefficients for each non-impaired line of a respective topology. In order to check to which topology element an impaired line belongs, these heatmap values are first pruned by an averaging operation. By the averaging operation, all heatmap coefficients for non-impaired lines of a certain topology with respect to a certain non-impaired line are averaged in order to obtain a single averaged heatmap coefficient for this certain topology element with respect to that certain non-impaired line. The averaging may for example be a weighted average of the respective heatmap coefficients for all non-impaired communication lines of the respective topology element with respect to the respective non-impaired communication line. Averaging may also refer to any other form of taking a central or typical value of a list of values, e.g. taking the median, the mode or mean.

Heatmap coefficients for a certain impaired line with respect to non-impaired lines are then correlated with the averaged heatmap coefficients for a topology element with respect to these non-impaired lines. The impaired line is then assigned to the topology element with the best correlation.

It is an advantage that not only impaired lines are identified, but also that they are associated with a topology element resulting in an accurate diagnosis without field intervention.

It is a further advantage that an averaging operation is performed. This way, the impaired line can be correlated with the topology element as a whole.

The topology elements may further correspond to a group of binders each binding a subset of said communication lines into a separate bundle. This allows identifying a specific binder in which there is an impaired line resulting in shorter field interventions.

According to an embodiment, the heatmap coefficients correspond to coefficients or elements of a heat matrix and the columns and rows of the heat matrix correspond to respective communication lines. An element of the heat matrix then corresponds to a heatmap coefficient for a communication line according to the column of the element with respect to a communication line according to the row of the element or the other way around.

When using a heat matrix, the splitting further comprises removing columns and lines corresponding to the impaired communication lines from the heat matrix thereby obtaining a non-impaired heat matrix comprising the non-impaired heatmap coefficients and thereby also obtaining separated impaired columns and lines comprising the impaired heatmap coefficients. The grouping then comprises reordering the non-impaired heat matrix such that columns and lines corresponding to communication lines of a same topology element are grouped together. The grouping also further comprises reordering the separated columns and lines according to the reordering of the non-impaired heat matrix into reordered separated columns and lines. When using the heat matrix, the calculating comprises averaging non-impaired heatmap coefficients of a single column or row of the non-impaired heat matrix belonging to a single topology element thereby obtaining single columns or rows comprising respective averaged heatmap values for a respective topology element. The correlating then comprises correlating the single columns or rows with the reordered separated columns and/or lines.

This allows performing the steps in an easy and straightforward manner by matrix equations.

According to a second aspect, the invention relates to a method for identifying an impaired communication line from a plurality of communication lines comprising the following steps:

- Obtaining heatmap coefficients for these communication lines. Wherein a heatmap coefficient for a first communication with respect to a second communication line is indicative for an amount of cross-talk between the first and second communication lines normalized by an attenuation value for the first communication line.
- Identifying one or more impaired communication lines comprising the impaired communication line from the heatmap coefficients.
- Splitting the heatmap coefficients in non-impaired heatmap coefficients associated with non-impaired communication lines and impaired heatmap coefficients associated with the impaired communications lines.
- Grouping the non-impaired communication lines into topology elements determined from the non-impaired heatmap coefficients.
- Calculating average heatmap values for each non-impaired communication line and for each topology element of the group. Wherein a first average heatmap value for a first non-impaired communication line and a first topology element is calculated from corresponding first heatmap coefficients between said first non-impaired communication line and communication lines assigned to said first topology element.
- Correlating, for each topology element, select impaired heatmap coefficients related to cross-talk between said impaired communication line and said non-impaired communication lines with said average heatmap values thereby obtaining a best correlated topology element of said group for said impaired communication line;

and wherein said topology elements correspond to binders each binding a subset of said communication lines (101) into a separate bundle (103).

According to a third aspect, the invention relates to a computer program product comprising computer-executable instructions for performing the method according to the second aspect when the program is run on a computer.

According to a fourth aspect, the invention relates to a computer readable storage medium comprising the computer program product according to the third aspect.

According to a fifth aspect, the invention relates to a data processing system programmed for carrying out the method according to the second aspect.

## Brief Description of the Drawings

Fig. 1 illustrates a data communication network comprising bundled communication lines between a DSLAM and CPEs; and

Fig. 2 illustrates steps performed for identifying and locating impaired communication lines by a device according to an embodiment; and

Fig. 3 illustrates an unprocessed heat map according to an embodiment; and

Fig. 4 illustrates the heatmap of Fig. 3 from which impaired communication lines are removed; and

Fig. 5 illustrates the heatmap of Fig. 4 after the allocation of non-impaired communication lines to identified topology elements; and

Fig. 6 illustrates curves representing averaged heatmap coefficients and heatmap coefficients of an impaired communication.

Fig. 7 illustrates the heatmap matrix of Fig. 5 where the non-impaired communication lines are assigned to the topology elements.

### Detailed Description of Embodiment(s)

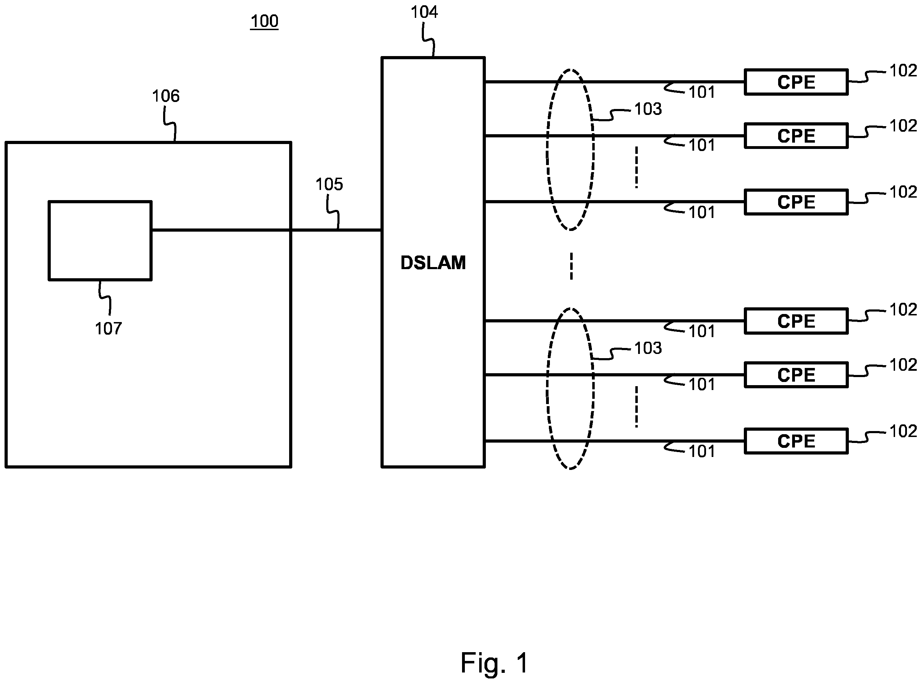

The invention relates to the identification of impaired communication lines among communication lines of a data communication network. Such a network 100 is depicted in Fig. 1 according to an embodiment. The communication lines 101 are twisted pair copper lines running from a Digital Subscriber Line Access Multiplexer or DSLAM to the customer, more specifically to the Customer-Premises Equipment or CPE 102. The twisted pair copper lines are also referred to as DSL lines because digital multi-tone modulation techniques are used to modulate binary data onto signals transmitted over these lines 101. In the DSLAM several of these lines come together and the data is multiplexed onto a backbone link 105 connecting the DSLAM with the network operator's Central Office or CO 106.

Typically, a DSLAM is located outside the CO 106 in a cabinet on the street near the CPEs 102. From there, bundles 103 of the communication lines run to the CPEs 102. Sometimes, communication lines 101 may be faulty caused by impairments in the lines such as for example a sharp bend, a bad connector at the DSLAM 104 or CPE 102 or any impairment causing a signal loss on the line which is bigger than what would be expected.

According to the embodiments a method is provided to remotely diagnose such impaired communication lines and to assign them to topology element such as the bundles 103. These methods may for example be performed within the DSLAM 104 or on a device 107 in the Central Office.

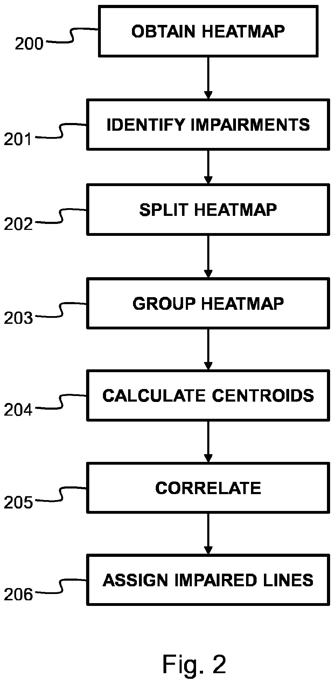

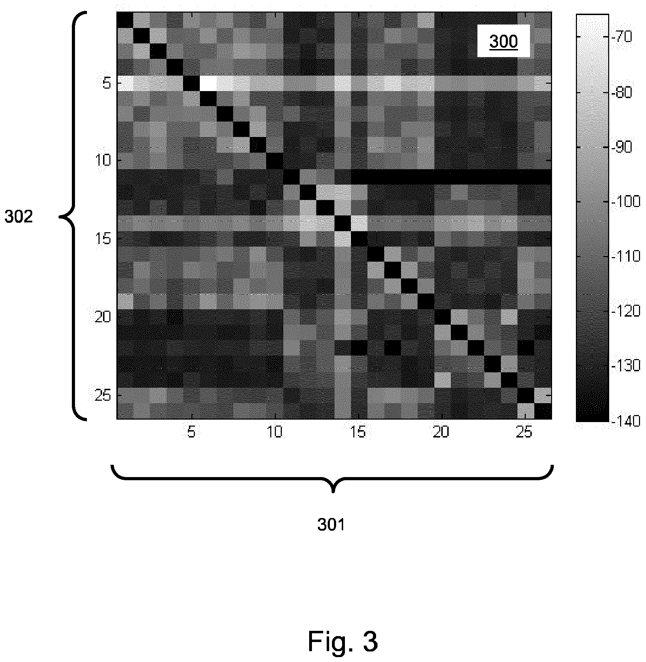

Steps for identifying such an impaired communication line are illustrated in Fig. 2. In a first step 200 a heatmap is obtained. According to an example as illustrated by Fig. 3 such a heatmap may be represented by a matrix 300. The rows 302 and columns 301 of the matrix represent the communication lines 101. An element of the heatmap 300 then corresponds to a heatmap coefficient. Such a coefficient is a measure for an amount of cross-talk received from a communication line according to the row of the element and introduced into a communication line according to the column of the element and normalized by an attenuation value of the communication line according to the column of the element. In Fig. 3 these coefficients are represented by grey scale values where the values range from black, i.e., -140dB, to white, i.e., -65dB. The heatmap 300 further represents 26 communication lines.

The coefficients may be calculated according to the following formula:

$$\left|G_{i,j}\right| = \frac{|H_{i,j}|}{|H_j|} \qquad\qquad \text{[Eq. 1]}$$

wherein

  $i$ is the row index; and
  $j$ is the column index; and
  $|G_{i,j}|$ is the heatmap coefficient for a communication line $j$ with respect to a communication line $i$; and
  $H_{i,j}$ is the crosstalk transfer function between communication line $i$ and communication line $j$; and
  $H_i$ is the direct path transfer function for the communication line $i$.

The coefficients for the transfer function are typically available in the DSLAM 104 and used in the pre- or post-coder for the mitigation of crosstalk in downstream or upstream communication. The pre- or post-coding is also referred to as vectoring and is for example used in the VDSL2 standard in order to achieve higher throughputs and higher bandwidths. Whereas traditional ADSL technology was using bandwidths up to 1.1MHz, the current VDSL2 technology can be applied up to bandwidths of 17 to 30MHz. In Fig. 3, the heatmap elements are represented by colours in the heatmap 300 indicative for the heatmap coefficients. The coloured elements provide an overall impression of the heatmap and of the way the communication lines influence each other.

In a second step 201, the impaired communication lines are identified from the non-impaired communication lines based on the heatmap coefficients. The steps in order to identify these non-impaired communication lines from the heat matrix based on the heatmap coefficients are disclosed in the unpublished European patent application EP13305290 from the same applicant.

In this publication it is disclosed that the identifying may be performed by generating histogram information for respective sets of heatmap coefficients; and comparing the histogram information of a potential impaired communication line of the communication lines to reference information to determine whether the potential impaired communication line is affected by an impairment. The "histogram information" is used to denote a histogram, a cumulative distribution, or any mathematically equivalent set of data that provides a statistical estimate of the distribution of the heatmap coefficients. The histogram of a set of crosstalk compensation coefficients of a potential impaired line is thus used to determine whether this line presents an impairment. A "regular", impairment-free histogram should present a roughly bimodal distribution of crosstalk compensation coefficients, wherein the peak situated at higher values groups the lines that are in the same binder as the target line, and the peak situated at lower values groups the lines that are not in the same binder as the target line. If a sufficiently accurate reference histogram representing the "regular" situation is available, for instance from prior measurements or from a mathematical derivation, it can be used to test lines for impairments on the basis of the measured histogram of their crosstalk compensation coefficients. Any significant deviation from the reference model may be considered a sign of an impairment.

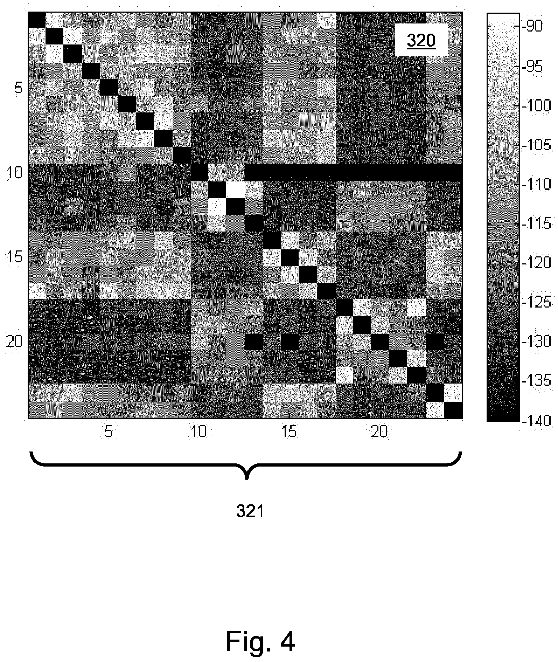

After the step 201, the heat matrix is pruned in the step 202 by removing the identified impaired communication lines from the heat matrix thereby obtaining a non-impaired heat matrix 320 with only non-impaired communication lines 321 as illustrated by Fig. 4. As can be seen from Fig. 4, the matrix now only has 24 rows and columns representing the non-impaired communication line instead of 26 rows and columns. In other words, 2 communication lines were identified as impaired and thus removed from the heat matrix 300 of Fig. 3.

Then, in step 203, the heatmap is grouped in topology elements. As the heatmap coefficients are an indication of how the communication lines influence each other, they also indicate how the communication lines are positioned with respect to each other. Therefore, from the heat matrix 320, topology elements such as binders can be identified and the communication lines 101 can be grouped according to these topology elements. In the publication EP2365661 (A1) steps are disclosed to perform this grouping in topology elements based on a heat map, i.e., based on heatmap coefficients.

In this publication it is disclosed that the grouping in binders may be performed by deriving distance information for at least one communication line based on the heatmap coefficients. Subsets of the communication lines are comprised in a set of different respective bundles, the bundles at least locally grouping the subset of communication lines physically. The grouping then comprises deriving which lines are located relatively close to each other based on the heatmap coefficients, hereby determining the number of bundles present in the set of bundles and determining which subsets of lines belong to each of the bundles respectively.

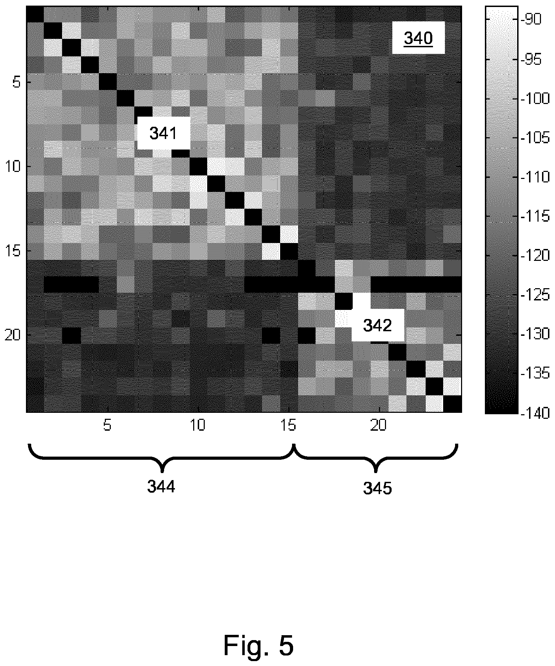

The exemplary heatmap 340 resulting from this grouping 203 is shown in Fig. 5 and reveals two topology elements 341 and 342 whereby communication lines 344 according to rows and columns 1 to 15 belong to element 341 and communication lines 345 according to rows and columns 16 to 24 belong to topology element 342. The grouping of the lines in topology elements is thus implemented by reordering the columns and lines of the heat matrix 320 such that columns and lines representing communication lines of a same topology element are grouped together.

After step 203, the impaired lines are thus identified and the non-impaired lines have been assigned to topology elements. In the further steps, each impaired line is also assigned to one of the topology elements. In order to do so, centroids are calculated for each identified topological element. The main difference between a centroid and a heatmap value is that a centroid value is a measure of the cross-talk between the topology element as a whole and a certain communication line. In the step 204, such centroid values are calculated. A centroid value for a topology element $B_{ID}$ with respect to a communication line may be calculated as follows:

$$centroid[i][B_{ID}] = \frac{1}{L_{B_{ID}}} \sum_{j \in B_{ID}} |G_{i,j}| \qquad \text{[Eq. 2]}$$

wherein

$i$ is the row index of the heatmap; and
$j$ is the column index of the heatmap; and
$|G_{i,j}|$ is the heatmap coefficient for a communication line $j$ with respect to a communication line $i$ as defined by Eq.1; and
$B_{ID}$ is the topology element, in this case the identification of one of the binders 341 or 342; and
$L_{B_{ID}}$ is the amount of lines in the topology element $B_{ID}$.

In other words, the centroid value is thus an average of heatmap coefficients of a topology element with respect to a single communication line. Alternatively, the centroid values or averaged heatmap coefficients may also be calculated by averaging over the rows according to the following formula:

$$centroid[j][B_{ID}] = \frac{1}{L_{B_{ID}}} \sum_{i \in B_{ID}} |G_{i,j}| \qquad \text{[Eq. 3]}$$

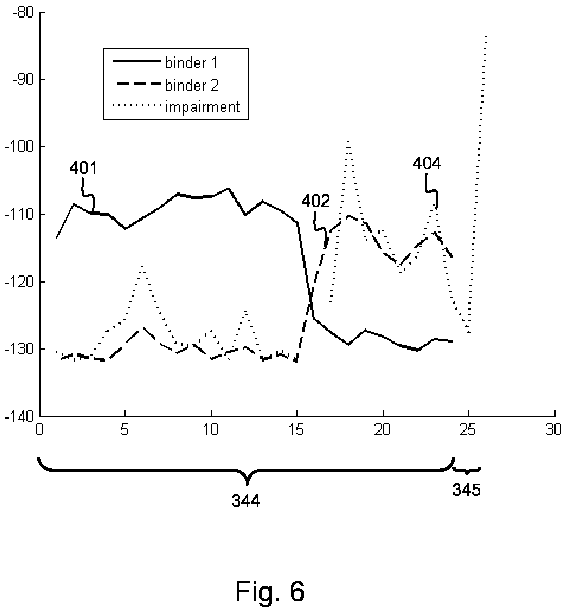

Centroid values for a certain topology may be represented as a function of the respective communication lines to which they relate and are referred to as centroid curves. Such a representation is shown in Fig. 6 where the curves 401 and 402 are the respective centroids for the topology elements 341 and 342.

Then, in the next step 205 according to Fig. 2, a correlation is performed between the heatmap coefficients of an impaired line and the centroid values for a certain topology. In Fig. 6, the heatmap coefficients of one of the impaired line are represented by curve 404 where the coefficients are plotted on the Y-axis as a function of the line to which they relate on the X-axis. The correlation is only performed for the coefficients that relate to the non-impaired lines 344 corresponding to the identified non-impaired lines 345 from step 201. The topology element that corresponds to the centroid curve that correlates the best with the impaired line is then selected as the topology element to which the impaired line belongs.

The correlation step 205 may be performed by calculating a correlation value according to the following formula:

$$correlation[l][B_{ID}] =$$

$$\frac{\sum_{j \in B_{ID}}\left(centroid[j][B_{ID}] - \mu_{centroid[B_{ID}]}\right).\left(G[l,j] - \mu_{G[l,c]}\right)}{\sqrt{\sum_{j \in B_{ID}}\left(centroid[j][B_{ID}] - \mu_{centroid[B_{ID}]}\right)^2} \cdot \sqrt{\sum_{j \in B_{ID}}\left(G[l,j] - \mu_{G[l,c]}\right)^2}} \qquad \text{[Eq. 4]}$$

wherein

$correlation[l][B_{ID}]$ is the correlation value of a correlation between an impaired line $l$ and a topology element $B_{ID}$; and
$j$ is the column index of a communication line; and
$\mu_{centroid[B_{ID}]}$ is the average centroid value of centroid curve for topology element $B_{ID}$; and
$\mu_{G[l,c]}$ is the average heatmap coefficient of the impaired line.

Preferably, before the correlation is performed, the heatmap coefficients of the impaired line are also reordered, i.e., the columns and lines that were initially removed from the heat matrix 300 are also reordered according to the grouping as done for the heat matrix 320 by which the heat matrix 340 was obtained. This way the column index for the centroid values and the column index for the heatmap coefficient of the impaired line will refer to the same number. This makes the implementation of the equation Eq. 4 straightforward as simple matrix arithmetic can be applied to the heat matrix 340 and the vectors representing the heatmap coefficients for the impaired lines.

In step 206 impaired lines are then assigned to the appropriate topology element according to the correlation performed in step 205. It should be noted that not all impaired lines may be assigned to topology elements according to the result of the correlation. A defect line for example will have all the same heatmap coefficients and can thus not be assigned to a topology element. In such a case a new topology element may be created for this impaired line.

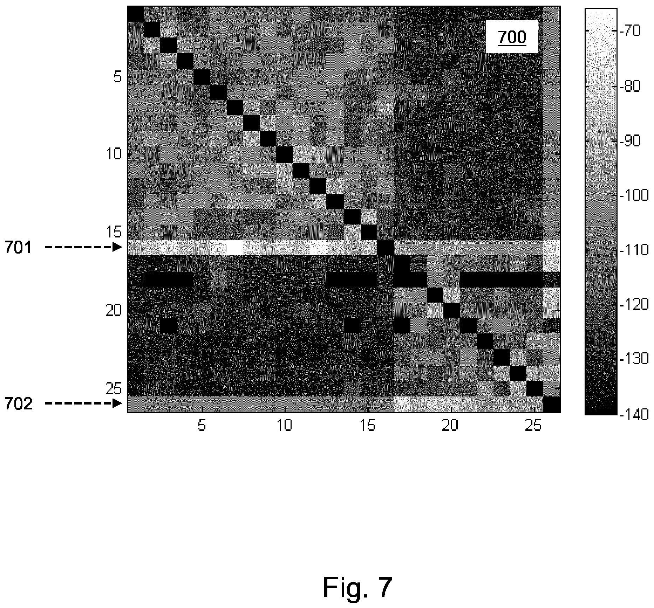

The result of the step 206 is illustrated by the heatmap 700 in Fig. 7. There, the heatmap coefficients of the impaired communication lines 701 and 702 have been added to the heatmap 340 resulting in the heatmap 700.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A device for identifying an impaired communication line (701, 702) from a plurality of communication lines (101, 301, 302); said device being configured to perform the following steps:

- obtaining (200) heatmap coefficients (300) for said communication lines with respect to said communication lines; wherein a heatmap coefficient for a first communication line with respect to a second communication line is indicative for an amount of cross-talk between said first and second communication lines normalized by an attenuation value for said first communication line; and

- identifying (201) one or more impaired communication lines (701, 702) comprising said impaired communication line from said heatmap coefficients; and

- splitting (202) said heatmap coefficients in non-impaired heatmap coefficients (320) for non-impaired communication lines (321) and impaired heatmap coefficients for said impaired communications lines (701, 702); and

- grouping (203) said non-impaired communication lines (321) into topology elements (341, 342) determined from said non-impaired heatmap coefficients; and

- calculating (204) averaged heatmap values (401, 402) for each topology element with respect to said non-impaired communication lines; and wherein a respective averaged heatmap value for a respective topology element with respect to a respective communication line is calculated from heatmap coefficients for all non-impaired communication lines of said respective topology element with respect to said respective non-impaired communication line;

- correlating (205), for each topology element, impaired heatmap coefficients (404) for said impaired communication line (701, 702) with respect to said non-impaired communication lines with averaged heatmap values (401, 402) for said each topology element with respect to said non-impaired communication lines thereby obtaining a best correlated topology element to which said impaired communication line belongs (701, 702);

wherein said topology elements correspond to binders each binding a subset of said communication lines (101) into a separate bundle (103).

2. A device according to claim 1 wherein said calculating comprises calculating a weighted average of said heatmap coefficients for all non-impaired communication lines of said respective topology element with respect to said respective non-impaired communication line.

3. A device according to claim 1 wherein said heatmap coefficients correspond to coefficients of a heat matrix (300); and wherein columns (301) and rows (302) correspond to respective communication lines.

4. A device according to claim 3 wherein said splitting comprises removing columns and lines corresponding to said impaired communication lines from said heat matrix (300) thereby obtaining a non-impaired heat matrix (320) comprising said non-impaired heatmap coefficients and thereby also obtaining separated impaired columns and lines comprising said impaired heatmap coefficients;

and wherein said grouping comprises reordering said non-impaired heat matrix such that columns (344, 345) and lines corresponding to communication lines of a same topology element (341, 342) are grouped together; and wherein said grouping further comprises reordering said separated columns and lines according to said reordering of said non-impaired heat matrix into reordered separated columns and lines;

and wherein said calculating comprises averaging non-impaired heatmap coefficients of a single column or row of said non-impaired heat matrix belonging to a single topology element thereby obtaining single columns or rows comprising respective averaged heatmap values for a respective topology element;

and wherein said correlating comprises correlating said single columns or rows with said reordered separated columns and/or lines.

5. A method for identifying an impaired communication line from a plurality of communication lines (101) comprising the following steps:

- obtaining (200) heatmap coefficients (300) for said communication lines with respect to said communication lines; wherein a heatmap coefficient for a first communication line with respect to a second communication line is indicative for an amount of cross-talk between said first and second communication lines normalized by an attenuation value for said first communication line; and

- identifying (201) one or more impaired communication lines comprising said impaired communication line from said heatmap coefficients (300); and

- splitting (202) said heatmap coefficients (300) in non-impaired heatmap coefficients (320) for non-impaired communication lines (321) and impaired heatmap coefficients for said impaired communications lines;

- grouping (203) said non-impaired communication lines (321) into topology elements (341, 342) determined from said non-impaired heatmap coefficients (320); and

- calculating (204) averaged heatmap values (401, 402) for each topology element with respect to said non-impaired communication lines; and wherein a respective averaged heatmap value for a respective topology element with respect to a respective communication line is calculated from heatmap coefficients for all non-impaired communication lines of said respective topology element with respect to said respective non-impaired communication line;

- correlating (205), for each topology element, impaired heatmap coefficients (404) for said impaired communication line with respect to said non-impaired communication lines with averaged heatmap values (401, 402) for said each topology element thereby obtaining a best correlated topology element to which said impaired communication line belongs;

and wherein said topology elements correspond to binders each binding a subset of said communication lines (101) into a separate bundle (103).

6. A computer program product comprising computer-executable instructions for performing the method according to claim 5 when the program is run on a computer.

7. A computer readable storage medium comprising the computer program product according to claim 6.

8. A data processing system programmed for carrying out the method according to claim 5.

**Patentansprüche**

1. Vorrichtung zum Identifizieren einer gestörten Kommunikationsleitung (701, 702) aus einer Vielzahl von Kommunikationsleitungen (101, 301, 302); wobei die besagte Vorrichtung ausgelegt ist, um die folgenden Schritte durchzuführen:

- Erhalten (200) von Heatmap-Koeffizienten (300) für die besagten Kommunikationsleitungen in Bezug auf die besagten Kommunikationsleitungen; wobei ein Heatmap-Koeffizient für eine erste Kommunikationsleitung in Bezug auf eine zweite Kommunikationsleitung bezeichnend ist für eine Nebensprechmenge zwischen der besagten ersten und zweiten Kommunikationsleitung, normiert durch einen Dämpfungswert für die besagte erste Kommunikationsleitung; und

- Identifizieren (201) von einer oder mehreren gestörten Kommunikationsleitungen (701, 702), welche die besagte gestörte Kommunikationsleitung umfassen, aus den besagten Heatmap-Koeffizienten; und

- Aufspalten (202) der besagten Heatmap-Koeffizienten in nicht-gestörte Heatmap-Koeffizienten (320) für nicht-gestörte Kommunikationsleitungen (321) und gestörte Heatmap-Koeffizienten für die besagten gestörten Kommunikationsleitungen (701, 702); und

- Gruppieren (203) der besagten nicht-gestörten Kommunikationsleitungen (321) in Topologieelemente (341, 342), die aus den besagten nicht-gestörten Heatmap-Koeffizienten ermittelt werden; und

- Berechnen (204) von durchschnittlichen Heatmap-Werten (401, 402) für jedes Topologieelement in Bezug auf die besagten nicht-gestörten Kommunikationsleitungen; und wobei ein jeweiliger durchschnittlicher Heatmap-Wert für ein jeweiliges Topologieelement in Bezug auf eine jeweilige Kommunikationsleitung aus Heatmap-Koeffizienten für alle nicht-gestörten Kommunikationsleitungen des besagten jeweiligen Topologieelements in Bezug auf die besagte jeweilige nicht-gestörte Kommunikationsleitung berechnet wird;

- für jedes Topologieelement, Korrelieren (205) von gestörten Heatmap-Koeffizienten (404) für die besagte gestörte Kommunikationsleitung (701, 702) in Bezug auf die besagten nicht-gestörten Kommunikationsleitungen mit durchschnittlichen Heatmap-Werten (401, 402) für jedes besagte Topologieelement in Bezug auf die besagten nicht-gestörten Kommunikationsleitungen, wodurch ein am besten korreliertes Topologieelement erhalten wird, zu dem die besagte gestörte Kommunikationsleitung (701, 702) gehört;

wobei die besagten Topologieelemente Verbindern entsprechen, die jeweils eine Teilgruppe der besagten Kommunikationsleitungen (101) zu einem separaten Bündel (103) verbinden.

2. Vorrichtung nach Anspruch 1, wobei das besagte Berechnen das Berechnen eines gewichteten Durchschnitts der besagten Heatmap-Koeffizienten für alle nicht-gestörten Kommunikationsleitungen des besagten jeweiligen Topologieelements in Bezug auf die besagte jeweilige nicht-gestörte Kommunikationsleitung umfasst.

3. Vorrichtung nach Anspruch 1, wobei die besagten Heatmap-Koeffizienten Koeffizienten einer Hitze-Matrix (300) entsprechen; und wobei Spalten (301) und Reihen (302) jeweiligen Kommunikationsleitungen entsprechen.

**4.** Vorrichtung nach Anspruch 3, wobei das besagte Aufspalten das Entfernen von Spalten und Zeilen entsprechend den besagten gestörten Kommunikationsleitungen aus der besagten Hitze-Matrix (300) umfasst, wodurch eine nicht-gestörte Hitze-Matrix (320) erhalten wird, welche die besagten nicht-gestörten Heatmap-Koeffizienten umfasst, und wodurch ebenfalls getrennte gestörte Spalten und Zeilen erhalten werden, welche die besagten gestörten Heatmap-Koeffizienten umfassen;

und wobei das besagte Gruppieren das Neuordnen der besagten nicht-gestörten Hitze-Matrix umfasst, so dass Spalten (344, 345) und Zeilen entsprechend den Kommunikationsleitungen eines gleichen Topologieelements (341, 342) zusammengruppiert werden; und wobei das besagte Gruppieren weiterhin das Neuordnen der besagten getrennten Spalten und Zeilen gemäß dem besagten Neuordnen der besagten nicht-gestörten Hitze-Matrix in neugeordnete getrennte Spalten und Zeilen umfasst;

und wobei das besagte Berechnen das Mitteln von nicht-gestörten Heatmap-Koeffizienten einer einzelnen Spalte oder Reihe der besagten nicht-gestörten Hitze-Matrix umfasst, die zu einem einzelnen Topologieelement gehört, wodurch einzelne Spalten und Reihen erhalten werden, die jeweilige durchschnittliche Heatmap-Werte für ein jeweiliges Topologieelement umfassen;

und wobei das besagte Korrelieren das Korrelieren der besagten einzelnen Spalten oder Reihen mit den besagten neugeordneten getrennten Spalten und/oder Zeilen umfasst.

**5.** Verfahren zum Identifizieren einer gestörten Kommunikationsleitung aus einer Vielzahl von Kommunikationsleitungen (101), umfassend folgende Schritte:

- Erhalten (200) von Heatmap-Koeffizienten (300) für die besagten Kommunikationsleitungen in Bezug auf die besagten Kommunikationsleitungen; wobei ein Heatmap-Koeffizient für eine erste Kommunikationsleitung in Bezug auf eine zweite Kommunikationsleitung bezeichnend ist für eine Nebensprechmenge zwischen der besagten ersten und zweiten Kommunikationsleitung, normiert durch einen Dämpfungswert für die besagte erste Kommunikationsleitung; und

- Identifizieren (201) von einer oder mehreren gestörten Kommunikationsleitungen, welche die besagte gestörte Kommunikationsleitung umfassen, aus den besagten Heatmap-Koeffizienten (300); und

- Aufspalten (202) der besagten Heatmap-Koeffizienten (300) in nicht-gestörte Heatmap-Koeffizienten (320) für nicht-gestörte Kommunikationsleitungen (321) und gestörte Heatmap-Koeffizienten für die besagten gestörten Kommunikationsleitungen;

- Gruppieren (203) der besagten nicht-gestörten Kommunikationsleitungen (321) in Topologieelemente (341, 342), die aus den besagten nicht-gestörten Heatmap-Koeffizienten (320) ermittelt werden; und

- Berechnen (204) von durchschnittlichen Heatmap-Werten (401, 402) für jedes Topologieelement in Bezug auf die besagten nicht-gestörten Kommunikationsleitungen; und wobei ein jeweiliger durchschnittlicher Heatmap-Wert für ein jeweiliges Topologieelement in Bezug auf eine jeweilige Kommunikationsleitung aus Heatmap-Koeffizienten für alle nicht-gestörten Kommunikationsleitungen des besagten jeweiligen Topologieelements in Bezug auf die besagte jeweilige nicht-gestörte Kommunikationsleitung berechnet wird;

- für jedes Topologieelement, Korrelieren (205) von gestörten Heatmap-Koeffizienten (404) für die besagte gestörte Kommunikationsleitung in Bezug auf die besagten nicht-gestörten Kommunikationsleitungen mit durchschnittlichen Heatmap-Werten (401, 402) für jedes besagte Topologieelement, wodurch ein am besten korreliertes Topologieelement erhalten wird, zu dem die besagte gestörte Kommunikationsleitung gehört;

und wobei die besagten Topologieelemente Verbindern entsprechen, die jeweils eine Teilgruppe der besagten Kommunikationsleitungen (101) zu einem separaten Bündel (103) verbinden.

**6.** Computerprogrammprodukt, umfassend computerausführbare Anweisungen zum Durchführen des Verfahrens nach Anspruch 5, wenn das Programm auf einem Computer läuft.

**7.** Computerlesbares Speichermedium, umfassend das Computerprogrammprodukt nach Anspruch 6.

**8.** Datenverarbeitungssystem, das zum Ausführen des Verfahrens nach Anspruch 5 programmiert ist.

**Revendications**

**1.** Dispositif pour identifier une ligne de communication altérée (701, 702) parmi une pluralité de lignes de communication (101, 301, 302) ; ledit dispositif étant configuré pour effectuer les étapes suivantes :

- obtenir (200) des coefficients de carte thermique (300) pour lesdites lignes de communication par rapport auxdites lignes de communication ; un coefficient de carte thermique pour une première ligne de communication par rapport à une seconde ligne de communication étant indicatif d'une quantité de diaphonie entre lesdites première et seconde lignes de communication normalisée par une valeur d'affaiblissement pour ladite première ligne de communication ; et

- identifier (201) une ou plusieurs lignes de communication altérées (701, 702) comprenant ladite ligne de communication altérée à partir desdits coefficients de carte thermique ; et

- diviser (202) lesdits coefficients de carte thermique en coefficients de carte thermique non altérés (320) pour des lignes de communication non altérées (321) et coefficients de carte thermique altérés pour lesdites lignes de communication altérées (701, 702) ; et

- regrouper (203) lesdites lignes de communication non altérées (321) en éléments de topologie (341, 342) déterminés à partir desdits coefficients de carte thermique non altérés ; et

- calculer (204) des valeurs de carte thermique moyennées (401, 402) pour chaque élément de topologie par rapport auxdites lignes de communication non altérées ; et une valeur de carte thermique moyennée respective pour un élément de topologie respectif par rapport à une ligne de communication respective étant calculée à partir de coefficients de carte thermique pour toutes les lignes de communication non altérées dudit élément de topologie respectif par rapport à ladite ligne de communication non altérée respective ;

- corréler (205), pour chaque élément de la topologie, des coefficients de carte thermique altérés (404) pour ladite ligne de communication altérée (701, 702) par rapport auxdites lignes de communication non altérées avec des valeurs de carte thermique moyennées (401, 402) pour ledit chaque élément de topologie par rapport auxdites lignes de communication non altérées, obtenant ainsi un élément de topologie le mieux corrélé auquel ladite ligne de communication altérée appartient (701, 702) ;

dans lequel lesdits éléments de topologie correspondent à des liants, chacun liant un sous-ensemble desdites lignes de communication (101) dans un faisceau distinct (103).

2. Dispositif selon la revendication 1, dans lequel ledit calcul comprend le calcul d'une moyenne pondérée desdits coefficients de carte thermique pour toutes les lignes de communication non altérées dudit élément de topologie respectif par rapport à ladite ligne de communication non altérée respective.

3. Dispositif selon la revendication 1, dans lequel lesdits coefficients de carte thermique correspondent aux coefficients d'une matrice de chaleur (300) ; et dans lequel les colonnes (301) et les rangées (302) correspondent à des lignes de communication respectives.

4. Dispositif selon la revendication 3, dans lequel ladite division comprend la suppression de colonnes et de lignes correspondant auxdites lignes de communication altérées de ladite matrice de chaleur (300), obtenant ainsi une matrice de chaleur non altérée (320) comprenant lesdits coefficients de carte thermique non altérés et obtenant ainsi également des colonnes et des lignes altérées séparées comprenant lesdits coefficients de carte thermique altérés ;

et dans lequel ledit regroupement comprend le réordonnancement de ladite matrice de chaleur non altérée de sorte que des colonnes (344, 345) et des lignes correspondant à des lignes de communication d'un même élément de topologie (341, 342) soient regroupées ; et dans lequel ledit regroupement comprend en outre le réordonnancement desdites colonnes et lignes séparées en fonction dudit réordonnancement de ladite matrice de chaleur non altérée en colonnes et lignes séparées réordonnées ;

et dans lequel ledit calcul comprend le moyennage des coefficients de carte thermique non altérés d'une seule colonne ou rangée de ladite matrice de chaleur non altérée appartenant à un seul élément de topologie, obtenant ainsi des colonnes ou des rangées uniques comprenant des valeurs de carte thermique moyennées respectives pour un élément de topologie respectif ;

et dans lequel ladite corrélation comprend la corrélation desdites colonnes ou rangées uniques avec lesdites colonnes et/ou lignes séparées réordonnées.

5. Procédé pour identifier une ligne de communication altérée parmi une pluralité de lignes de communication (101) comprenant les étapes suivantes :

- obtenir (200) des coefficients de carte thermique (300) pour lesdites lignes de communication par rapport auxdites lignes de communication ; un coefficient de carte thermique pour une première ligne de communication par rapport à une seconde ligne de communication étant indicatif d'une quantité de diaphonie entre lesdites première et seconde lignes de communication normalisée par une valeur d'affaiblissement pour ladite première ligne de communication ; et

- identifier (201) une ou plusieurs lignes de communication altérées comprenant ladite ligne de communication altérée à partir desdits coefficients de carte thermique (300) ; et

- diviser (202) lesdits coefficients de carte thermique (300) en coefficients de carte thermique non altérés (320) pour des lignes de communication non altérées (321) et coefficients de carte thermique altérés pour lesdites lignes de communication altérées ;

- regrouper (203) lesdites lignes de communication non altérées (321) en éléments de topologie (341, 342) déterminés à partir desdits coefficients de carte thermique non altérés (320) ; et

- calculer (204) des valeurs de carte thermique moyennées (401, 402) pour chaque élément de topologie par rapport auxdites lignes de communication non altérées ; et une valeur de carte thermique moyennée respective pour un élément de topologie respectif par rapport à une ligne de communication respective étant calculée à partir de coefficients de carte thermique pour toutes les lignes de communication non altérées dudit élément de topologie respectif par rapport à ladite ligne de communication non altérée respective ;

- corréler (205), pour chaque élément de la topologie, des coefficients de carte thermique altérés (404) pour ladite ligne de communication altérée par rapport auxdites lignes de communication non altérées avec des valeurs de carte thermique moyennées (401, 402) pour ledit chaque élément de topologie, obtenant ainsi un élément de topologie le mieux corrélé auquel ladite ligne de communication altérée appartient ;

et dans lequel lesdits éléments de topologie correspondent à des liants, chacun liant un sous-ensemble desdites lignes de communication (101) dans un faisceau distinct (103).

6. Produit de programme informatique comprenant des instructions exécutables par ordinateur pour effectuer le procédé selon la revendication 5 lorsque le programme est exécuté sur un ordinateur.

7. Support de stockage lisible par ordinateur comprenant le produit de programme informatique selon la revendication 6.

8. Système de traitement de données programmé pour réaliser le procédé selon la revendication 5.

Fig. 1

EP 2 963 837 B1

200 — OBTAIN HEATMAP

↓

201 — IDENTIFY IMPAIRMENTS

↓

202 — SPLIT HEATMAP

↓

203 — GROUP HEATMAP

↓

204 — CALCULATE CENTROIDS

↓

205 — CORRELATE

↓

206 — ASSIGN IMPAIRED LINES

Fig. 2

Fig. 3

EP 2 963 837 B1

Fig. 4

Fig. 5

EP 2 963 837 B1

Fig. 6

Fig. 7

**EP 2 963 837 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2365661 A
- EP 13305290 A
- EP 2365661 A1